# EUROPÄISCHE PATENTSCHRIFT

(11) **EP 0 461 398 B1**
(45) Veröffentlichungstag und Bekanntmachung des Hinweises auf die Patenterteilung: **22.09.1993**
(21) Anmeldenummer: 91107608.1
(22) Anmeldetag: 10.05.1991
(51) Int. Cl.: F16D 65/847

(54) **Lamellenscheibenbremse für Schienenfahrzeuge**
Multiple disc brake for rail vehicles
Frein à disques multiples pour véhicules sur rails

(30) Priorität: 13.06.1990 DE 4018987
(43) Veröffentlichungstag der Anmeldung: 18.12.1991
(73) Patentinhaber: KNORR-BREMSE AG, 80710 München (DE)
(72) Erfinder: Fuderer, Erich, W-8034 Germering (DE); Wirth, Xaver, Dr., W-8045 Ismaning (DE)

(56) Entgegenhaltungen:
- EP-A- 0 219 938
- DE-A- 3 148 732

## Beschreibung

Die Erfindung betrifft eine Lamellenscheibenbremse nach dem Gattungsbegriff des Patentanspruches 1.

In schnellfahrenden Schienenfahrzeugen kommen neben herkömmlichen Bremsscheiben, welche aus Grauguß oder vergleichbaren Materialien bestehen können, auch in gekapselten Gehäusen laufende Reibscheiben z.B. aus Kohlenstoff zum Einsatz. Diese Reibscheiben besitzen kleinere radiale Abmessungen und sind vorzugsweise in einem Lamellenpaket geführt, d.h. sie wirken mit Statorelementen zusammen, welche aus dem gleichen Material bestehen und zusammen mit den Reibscheiben im Paket durch Zuspannzylinder oder dgl. Betätigungselemente beaufschlagbar sind. Derartige Bremsscheibenanordnungen erfordern aus Gründen der Oxidationsgefahr des Reibmaterials, oder um abgetragenes Reibmaterial zurückzuerhalten, die vollständige Kapselung des Lamellenpaketes. Die Kühlung derartiger Bremsen durch Eigenbelüftung ist deshalb nicht möglich. Während eine freie Konvektion vor allem im Stand des Fahrzeugs zu Problemen führt (bei hoher Scheiben- bzw. Belagtemperatur heizen sich temperaturempfindliche Bauteile u.U. zu stark auf oder die Zeit bis zur Wiederbereitschaft der Bremse wird unvertretbar lang), bietet eine erzwungene Konvektion (Zwangsbelüftung) erhebliche Vorteile.

Die Aufgabe der Erfindung besteht darin, eine Lamellenscheibenbremse der gattungsgemäßen Art so auszugestalten, daß mit erzwungener Konvektion eine ausreichende Abkühlung des gekapselten Lamellenpakets und der angrenzenden Bauteile des Bremsaggregats ermöglicht ist. Im besonderen soll es möglich sein, eine ausreichende Abkühlung sowohl während des Stands des Schienenfahrzeugs als auch bei Fahrt sicherzustellen.

Zur Lösung dieser Aufgabe dienen die Merkmale nach dem Kennzeichnungsteil des Patentanspruches 1.

Durch die Zuordnung der Gehäusekapsel innerhalb des Bremsengehäuses und durch die Positionierung der Ventilatoren und des Lüfterrades im Bereich beider Stirnflächen des Gehäuses ist in Verbindung mit den im Inneren des Gehäuses sich erstreckenden Lüftungskanälen sichergestellt, daß sowohl die Rotation der Achse des Schienenfahrzeugs als auch die elektrische Energie zum Antrieb der verschiedenen Ventilatoreinheiten für die Kühlung benutzt werden kann.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig.1: ist eine Teilschnittansicht der Lamellenscheibenbremse, unter Darstellung der Schnittansicht bzw. des Teilschnitts entlang Linie I-I in Fig.2; und
- Fig.2: ist eine linksseitige Stirnansicht der Lamellenscheibenbremse nach Fig.1.

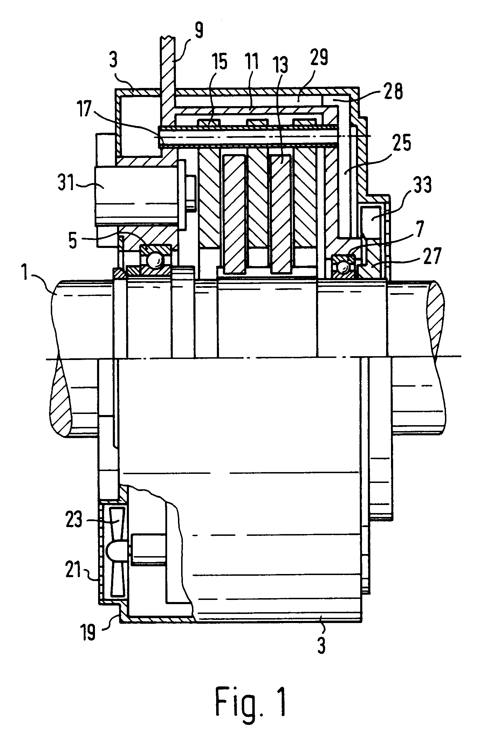

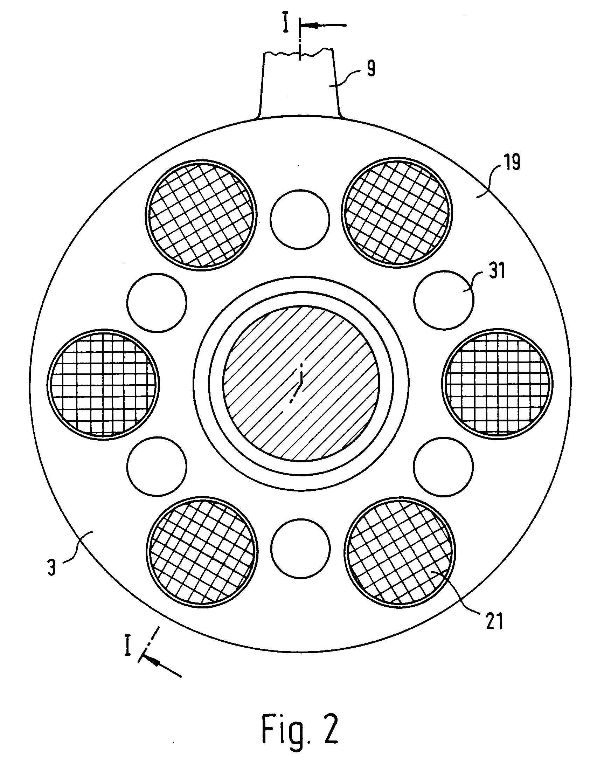

In der Zeichnung ist in Teilschnittansicht die Achse 1 eines Schienenfahrzeuges dargestellt, auf welcher die Lamellenscheibenbremse angeordnet ist. Die Lamellenscheibenbremse umfaßt ein Gehäuse 3, welches gegenüber der Achse 1 in Lagern 5 und 7 drehbar geführt ist und sich im (nicht dargestellten) Drehgestell des Schienenfahrzeugs über einen Hebelarm 9 als Drehmomentstütze abstützt. Der Gehäuseaufbau ist zweischalig, d.h. innerhalb des als äußere Schale ausgebildeten Gehäuses 3 ist eine Gehäusekapsel 11 (Fig.1) vorgesehen. Innerhalb der Gehäusekapsel 11 sind die Rotoren 13 und Statoren 15 der Lamellenscheibenbremse parallel zueinander geführt. Die Statoren 15 sind parallel zur Achse 1 verschiebbar an mehreren am Umfang unter Abstand zueinander angeordneten Statorhaltern 17 geführt, während die Rotoren 13 drehfest mit der Achse 1 verbunden, jedoch axial verschieblich auf dieser angeordnet sind. In die Stirnfläche 19 des Gehäuses 3 sind, über den Umfang verteilt, Lufteinlässe 21 integriert (Fig.2), in welchen Ventilatoren 23 sitzen.

An der gegenüberliegenden Stirnfläche des Gehäuses 3 ist ein als Luftdurchtritt wirkender Ringkanal 25 zwischen der Gehäusekapsel 9 und dem Gehäuse 3 ausgebildet. Innerhalb dieses Ringkanals befinden sich die Schaufeln eines auf der Achse 1 angebrachten Lüfterrades 27. In dem zwischen dem Außenumfang der Gehäusekapsel 11 und dem Gehäuse 3 bestehenden, ringförmigen Zwischenraum 28 können Leitbleche 29 vorgesehen sein, welche eine vorbestimmte oder eine veränderbare Winkelanstellung aufweisen können. Der Zwischenraum 28 steht in dargestellter Weise mit dem Ringkanal 25 in Verbindung.

In die in der Zeichnung nach Fig.1 linksseitig wiedergegebene Stirnfläche 19 der Lamellenscheibenbremse sind unter Winkelabstand zueinander Zuspannzylinder 31 eingesetzt, welche durch Druckmittel betätigbar sind und zur Betätigung der Lamellenscheibenbremse dienen, d.h. sie wirken in der Darstellung nach Fig.1 auf den ersten Stator des Lamellenpakets ein und vermögen zum Zwecke der Bremsbetätigung die einzelnen Lamellen gegenseitig anzupressen. Die Lamellen, d.h. Rotoren 13 und Statoren 15 innerhalb der Gehäusekapsel 11 sind gegenüber Außenluft verschlossen, d.h. das Innere der Gehäusekapsel 11 ist vollständig abgedichtet, wobei im Bereich der Lager 5 und 7 und an der zugewandten Stirnseite der Zuspannzylinder 31 besondere (nicht dagestellte) hitzefeste Dichtungselemente vorgesehen sind.

Die Wirkungsweise der gekapselten Lamellenscheibenbremse bzw. deren Kühlungseinrichtung ist wie folgt :

### Kühlung bei stehendem Fahrzeug :

Steht das Fahrzeug, so werden im Bedarfsfall über Thermoschalter die z.B. mit Elektromotoren angetriebenen Lüfter bzw. Ventilatoren 23 eingeschaltet. Dadurch wird kalte Umgebungsluft durch den vorstehend beschriebenen Zwischenraum 28 zwischen Gehäuse 3 und Gehäusekapsel 11 hindurchgeblasen. Die Leitbleche 29 führen die Kühlluft entsprechend den Erfordernissen. Am in der Zeichnung nach Fig.1 rechten Ende des Gehäuses 3 tritt die erwärmte Luft durch das stehende Lüfterrad 27 aus. Zum Transport der kühlenden Luft können die Statorhalter 17 in der aus der Zeichnung ersichtlichen Weise rohrförmig ausgebildet sein, d.h. es werden auch die Statorhalter im Inneren der Gehäusekapsel 11 gekühlt, wenn sie im Druckgefälle des Luftstromes liegen. Durch gezielt angebrachte Bohrungen und Kanäle sind auch die Wälzlager und weitere, evtl. thermisch geförderte Bereiche der einzelnen Zuspannzylinder 31 kühlbar.

### Kühlung bei drehender Achse :

Bei entsprechend Bewegung des Fahrzeugs sich drehender Achse 1 wird der Kühlluftstrom vom Lüfterrad 27, da er sich mit der Achse dreht, erzeugt. Je nach Steigung der Lüfterschaufeln 33 wird die Kühlluft angesaugt oder es wird geblasen. Der Lufteinlaß bzw. der Luftauslaß für die Kühlluft ist durch die Lufteinlässe 21 gebildet, in welchen sich die Ventilatoren 23 befinden. Wenn bei niedriger Drehzahl die Zuschaltung dieser motorisch betriebenen Einzellüfter erforderlich ist, ist eine gleichsinnige Förderrichtung zwischen den Ventilatoren 23 und dem Lüfterrad 27 sicherzustellen.

Sind die mit derartigen Lamellenscheibenbremsen ausgestattete Schienenfahrzeuge im Zweirichtungsverkehr eingesetzt, so sind die Lüfterschaufeln 33 achsparallel ausgerichtet. Die drehrichtungsunabhängige Förderrichtung wird dann von der konstruktiven Gestaltung des Lüfterbereiches bestimmt.

Die Lamellenscheibenbremse nach der Erfindung ist nicht auf die dargestellte Ausführungsform beschränkt, d.h. die Position der Ventilatoren 23 als auch ihr Antrieb sind z.B. in anderer Weise als wiedergegeben beschrieben ausführbar. So können die Ventilatoren 23 mittels Transmission (Zahnriemen) von einem zentralen Motor angetrieben werden. Die fremdangetriebenen Ventilatoren bzw. Lüfter können sich radial außenliegend am Gehäuse 3 befinden, wobei die Kühlluft symmetrisch durch Ringkanäle beidseits des Gehäuses strömt. Es können hierbei auch beidseits Lüfterräder 21 auf der Achse 1 sitzen. Es ist auch möglich, die Kühlluft mit einem separaten Aggregat zu erzeugen und dem Gehäuse 3 der Lamellenscheibenbremse stirnseitig zuzuführen, wobei die Lüfterleistung des Fremdaggregats durch die Lüfterleistung der Ventilatoren bzw. des Lüfterrades 27 unterstützt wird.

Es ist auch möglich, zwischen den Gehäuseschalen, d.h. vorzugsweise zwischen der Gehäusekapsel 11 und dem Innenumfang des Gehäuses 3 axial verlaufende Rohre vorzusehen, welche ebenfalls von Kühlluft durchströmt werden, was zu einer Erhöhung der Wärmeabfuhr beiträgt. Bei Verwendung derartiger axial verlaufender Rohre ist es auch möglich, zusätzlich ein weiteres Kühlmittel zu verwenden, welches stirnseitig am Gehäuse in die zusätzlichen, axial verlaufenden Rohre eingeleitet bzw. aus diesen abgeleitet wird. Es kann hierbei z.B. ein flüssiges Kühlmittel verwendet werden, welches z.B. auch durch die rohrförmig ausgebildeten Statorhalter 17 hindurch geleitet werden kann, wenn diese abgedichtete Einlaß- und Auslaßöffnungen an den Stirnseiten des Gehäuses aufweisen oder in sonstiger Weise gegenüber der Strömung von kühlender Luft abgedichtet sind.

### Bezugszeichenliste

- 1: Achse
- 3: Gehäuse
- 5: Lager
- 7: Lager
- 9: Hebelarm
- 11: Gehäusekapsel
- 13: Rotor
- 15: Stator
- 17: Statorhalter
- 19: Stirnfläche
- 21: Lufteinlaß
- 23: Ventilator
- 25: Ringkanal
- 27: Lüfterrad
- 28: Zwischenraum
- 29: Leitblech
- 31: Zuspannzylinder
- 33: Lüfterschaufel

## Patentansprüche

1. Lamellenscheibenbremse für Schienenfahrzeuge, mit einem in einer Gehäusekapsel befindlichen, aus Statoren und Rotoren bestehenden Lamellenpaket, welches durch in das Innere der Gehäusekapsel sich erstreckende, gleichfalls abgedichtete Zuspannzylinder beaufschlagbar ist, gekennzeichnet durch folgende Merkmale :
a) Die Gehäusekapsel (11) ist derart innerhalb des die Lamellenscheibenbremse aufnehmenden Gehäuses (3) angeordnet, daß im Zwischenraum zwischen Gehäusekapsel (11) und Innenumfang des Gehäuses (3) vorzugsweise parallel zur abzubremsenden Achse (1) sich erstreckende Lüftungskanäle vorgesehen sind;
b) im Bereich wenigstens einer der Stirnflächen (19) des Gehäuses und/oder am Außenumfang des Gehäuses (3) sind Ventilatoren (23) gelagert, welche mit den Lüftungskanälen in Strömungsverbindung sind; und
c) im Bereich der entgegengesetzten Stirnfläche des Gehäuses (3) ist ein ein auf der Achse (1) gelagertes Lüfterrad (27) aufnehmender Ringkanal (25) vorgesehen, derart, daß die von den Ventilatoren (23) durch die Lüftungskanäle hindurchgeleitete Kühlluft über den Ringkanal und das Lüfterrad (27) das Gehäuse (3) verläßt.

2. Lamellenscheibenbremse nach Anspruch 1, dadurch gekennzeichnet, daß die Ventilatoren (23) an der Stirnfläche (19) des Gehäuses (3) unter Winkelabstand zueinander angeordnet und jeweils mit einem elektrischen Antrieb ausgestattet sind.

3. Lamellenscheibenbremse nach Anspruch 1, dadurch gekennzeichnet, daß die sich unter Winkelabstand zueinander abgedichtet durch die Gehäusekapsel (11) erstreckenden Statorhalter (17) für das Lamellenpaket jeweils als Rohr ausgebildet sind und zum zusätzlichen Transport von Kühlluft dienen.

4. Lamellenscheibenbremse nach Anspruch 1, dadurch gekennzeichnet, daß sich innerhalb der Lüftungskanäle zwischen dem Außenumfang der Gehäusekapsel (11) und dem Innenumfang des Gehäuses (3) Leitbleche (29) erstrecken.

5. Lamellenscheibenbremse nach einem der vorangehenden Ansprüche, dadurch gekennzeichnet, daß das Lüfterrad (27) an einem stirnseitigen Auslaß des Gehäuses (3) vorgesehen ist, und daß die Steigung der Lüfterschaufel (33) zwischen saugender und drückender Funktionsweise einstellbar ist.

6. Lamellenscheibenbremse nach einem der vorangehenden Ansprüche, dadurch gekennzeichnet, daß das Lüfterrad durch die sich drehende Achse (1) antreibbar ist.

## Claims

1. Multiple disc brake for rail vehicles, having a stack of discs disposed in a housing capsule and comprising stators and rotors, which stack can be acted on by clamping cylinders extending into the housing capsule while likewise sealed, characterised by the following features:
a) the housing capsule (11) is arranged within the housing (3) receiving the multiple disc brake in such a way that ventilation shafts extending preferably parallel to the shaft (1) to be braked are provided in the intermediate space between the housing capsule (11) and the inner circumference of the housing (3);
b) ventilators (23) are mounted in the region of at least one of the front faces (19) of the housing and/or on the outer circumference of the housing (3) and are in flow connection with the ventilation shafts; and
c) in the region of the opposite front face of the housing (3) there is provided an annular duct (25) receiving a fan wheel (27) mounted on the shaft (1) in such a way that the cooling air conveyed through the ventilating shafts by the ventilators (23) leaves the housing (3) via the annular duct and the fan wheel (27).

2. Multiple disc brake according to claim 1, characterised in that the ventilators (23) are arranged on the front face (19) of the housing (3) at an angular distance from each other and are each equipped with an electrical drive.

3. Multiple disc brake according to claim 1, characterised in that the stator holders (17) for the stack of discs, extending through the housing capsule (1) at an angular distance and sealed with respect to each other are each constructed as a tube and are used for the additional transport of cooling air.

4. Multiple disc brake according to claim 1, characterised in that fins (29) extend inside the ventilating shafts between the outer circumference of the housing capsule (11) and the inner circumference of the housing (3).

5. Multiple disc brake according to one of the preceding claims, characterised in that the fan wheel (27) is provided on an end outlet of the housing (3), and in that the pitch of the fan blade (33) can be adjusted between the suction and the pressure mode.

6. Multiple disc brake according to one of the preceding claims, characterised in that the fan wheel can be driven by the rotating shaft (1).

## Revendications

1. Frein à disques magnétiques pour véhicules sur rails, comportant un paquet de disques qui est situé dans une capsule de boîtier et constitué par des stators et des rotors, et peut être chargé par des vérins de serrage qui s'étendent à l'intérieur de la capsule de boîtier et sont également fermés de façon étanche, caractérisé par les particularités suivantes :
a) la capsule de boîtier (11) est disposée à l'intérieur du boîtier (3), qui loge le frein à disques multiples de telle sorte que des canaux d'aération, de préférence parallèles à l'essieu (1) devant être freiné, sont ménagés dans l'espace intercalaire présent entre la capsule de boîtier (11) et la circonférence intérieure du boîtier (3);
b) au niveau d'au moins l'une des surfaces frontales (19) du boîtier et/ou sur la périphérie extérieure du boîtier (3) sont disposés des ventilateurs (23), qui sont réunis selon une liaison fluidique aux canaux d'aération; et
c) dans la zone de la surface frontale opposée du boîtier (3), il est prévu un canal annulaire (25) qui loge un rotor de ventilateur (27) monté sur l'essieu (1), de sorte que l'air de refroidissement, introduit par les ventilateurs (23) dans les canaux d'aération, quitte le boîtier (3) par l'intermédiaire du canal annulaire et du rotor de ventilateur (27).

2. Frein à disques multiples suivant la revendication 1, caractérisé par le fait que les ventilateurs (23) sont disposés sur la surface frontale (19) du boîtier (3) en étant distants angulairement et sont équipés chacun d'un dispositif d'entraînement électrique.

3. Frein à disques multiples suivant la revendication 1, caractérisé par le fait que les porte-stators (17), qui s'étendent dans la capsule du boîtier (11) en étant séparés par une certaine distance angulaire et étanchéifiés les uns par rapport aux autres, pour le paquet disques, sont agencés sous la forme de tubes respectifs et sont utilisés pour réaliser l'entraînement supplémentaire de l'air de refroidissement.

4. Frein à disques multiples suivant la revendication 1, caractérisé par le fait que des chicanes (29) s'étendent à l'intérieur des canaux d'aération entre la périphérie extérieure de la capsule de boîtier (11) et la périphérie intérieure du boîtier (3).

5. Frein à disques multiples suivant l'une des revendications précédentes, caractérisé par le fait que le rotor de ventilateur (27) est monté sur une sortie frontale du boîtier (3) et que l'inclinaison des pales (33) du ventilateur est réglable entre un fonctionnement d'aspiration et un fonctionnement de refoulement.

6. Frein à disques multiples suivant l'une des revendications précédentes, caractérisé par le fait que le rotor de ventilateur peut être entraîné au moyen de l'essieu rotatif (1).
